# EUROPÄISCHE PATENTSCHRIFT

(11) **EP 4 413 277 B1**
(45) Veröffentlichungstag und Bekanntmachung des Hinweises auf die Patenterteilung: **05.11.2025**
(21) Anmeldenummer: 22797335.1
(22) Anmeldetag: 28.09.2022
(51) Int. Cl.: F16D 65/00

(54) **SCHEIBENBREMSE UND BREMSBELAG FÜR EINE SCHEIBENBREMSE**
DISC BRAKE AND BRAKE LINING FOR A DISC BRAKE
FREIN À DISQUE ET GARNITURE DE FREIN POUR UN FREIN À DISQUE

(30) Priorität: 07.10.2021 DE 102021126026
(43) Veröffentlichungstag der Anmeldung: 14.08.2024
(73) Patentinhaber: KNORR-BREMSE Systeme für Nutzfahrzeuge GmbH, 80809 München (DE)
(72) Erfinder: WEBER, Ralf, 80997 München (DE); RGUICHI, Abdelaziz, 82140 Olching (DE); BUCH, Andreas, 82024 Taufkirchen (DE); RIBA, Zoltan, 82140 Olching (DE); WERTH, Alexander, 80999 München (DE); FISCHER, Rudolf, 85435 Erding (DE); AKBALIK, Erkan, 81245 München (DE)
(86) Internationale Anmeldenummer: PCT/EP2022/076893
(87) Internationale Veröffentlichungsnummer: WO 2023/057267

(56) Entgegenhaltungen:
- EP-A1- 3 369 959
- CN-A- 111 503 182
- CN-A- 112 789 426
- FR-A1- 2 815 099
- FR-A1- 3 071 573
- GB-A- 2 533 476
- US-A1- 2015 122 601
- US-A1- 2021 239 168

## Beschreibung

Die Erfindung betrifft eine Scheibenbremse nach dem Oberbegriff des Anspruchs 1.

Die geltenden Umweltanforderungen und die damit verbundenen gesetzliche Grundlagen werden zukünftig erhöhte Anforderungen zur Vermeidung von Feinstaub mit sich bringen. Somit wird es notwendig, technische Lösungen für Scheibenbremsen für ein Nutzfahrzeug zu entwickeln, die in der Lage sind Bremsstaub, insbesondere den Feinstaubanteil von Bremsstaub, zu minimieren und idealerweise dessen Emission zu verhindern.

Die hierzu vorliegenden technischen Lösungen, die sich in erster Linie auf den PKW-Bereich konzentrieren, sind weitgehend darauf angelegt den Bremsstaub aus dem die Scheibenbremse umgebenen Bauraum, mit oder ohne Hilfe von Luftdruck, vorzugweise mit einer Absaug- und Abscheideanlage, durch einen Filter zu leiten und zu sammeln. Hierzu ist es meist notwendig den umgebenden Bauraum einzugrenzen, indem Abdeck- bzw. Abschirmbleche um die Radbremse verbaut werden (siehe z.B. die US 2010/0096226 A1).

Aus der WO 2008/083884 A1 ist der Einsatz einer solchen Absaug- und Abscheideanlage bekannt, die einerseits der Bremsscheibe einer Scheibenbremse einen Feinstaubfilter und andererseits einen Lüfter aufweist und die beide in einer Radfelge positioniert sind, wobei der Feinstaubfilter gegenüber der Umgebung hermetisch abgedichtet an der Felge gehalten ist.

Die EP 2 585 730 B1 offenbart eine auch für den Einsatz an Nutzfahrzeugen geeignete gattungsgemäße Scheibenbremse mit einer Absaug- und Abscheideanlage. Die Scheibenbremse weist einen eine Bremsscheibe übergreifenden Bremssattel auf, in dem mit Reibbelägen versehene Bremsbeläge angeordnet sind, die jeweils mit ihrem Reibbelag beidseitig an Reibringflächen der Bremsscheibe anpressbar sind, wobei die Reibringe außerhalb des Überdeckungsbereiches der Reibbeläge mit einem gegenüber dem Bremssattel fest stehenden Gehäuse abgedeckt sind, das mit einer Saugeinrichtung verbunden ist, wobei zwischen dem Gehäuse und der Saugeinrichtung eine Entstaubungsvorrichtung vorgesehen ist.

Diese Konstruktion hat sich an sich gut bewährt, soll aber weiter optimiert werden. So kann die Umgebung des Fahrzeugs, vornehmlich die Verhältnisse im Radkasten und innerhalb der Felge, durch den Fahrtwind für eine diffuse Verwirbelung des entstehenden Bremsstaubs sorgen. Ebenso können die Abdeckblech kaum derart gestaltet werden, dass die Bremse komplett gekapselt ist. Denn eine weitergehende Kapselung der Bremse könnte in entsprechenden thermischen Problemen der Reibpaarung resultieren.

Eine gattungsgemäße Scheibenbremse und einen gattungsgemäßen Bremsbelagsatz zeigt die WO 2014199129 A1.

Zum technologischen Hintergrund werden ferner die EP 3 369 959 A1 und die US 2015/122601 A1, die US 2021/239163 und die CN 111 503 182 A genannt.

Der Erfindung liegt die Aufgabe zugrunde, eine Scheibenbremse der gattungsgemäßen Art so weiterzuentwickeln, dass ein Entweichen des Bremsabriebs in die Umgebung mit einfachen konstruktiven Mitteln weitgehend verhindert wird. Die Erfindung hat ferner die Aufgabe, einen für einen solche Scheibenbremse besonders gut geeigneten Bremsbelagsatz aus zwei Bremsbelägen zu schaffen.

Diese Aufgabe wird durch eine Scheibenbremse mit den Merkmalen des Anspruchs 1 gelöst. Die weitere Teilaufgabe wird ferner durch den Bremsbelagsatz des Anspruchs 11 gelöst. Vorteilhafte Ausgestaltungen und Weiterbildungen sind in den Unteransprüchen angegeben.

Die Erfindung schafft zunächst eine Scheibenbremse, mit einem eine Bremsscheibe übergreifenden Bremssattel, in dem jeweils mit einem Reibbelag und einer Rückenplatte versehene Bremsbeläge angeordnet sind, die jeweils mit ihrem Reibbelag beidseitig an Reibringflächen der Bremsscheibe anpressbar sind, und mit einer Saugrohranordnung zum Absaugen von bei Bremsungen entstehenden Abrieb, wobei an jedem der beiden Bremsbeläge eines oder mehrere Absaugrohr(e) der Saugrohranordnung angeordnet ist/sind.

Geschaffen wird zudem ein Bremsbelagsatz, insbesondere für eine Scheibenbremse nach einem der darauf bezogenen Ansprüche, mit zwei Bremsbelägen, die jeweils einen Reibbelag und eine Rückenplatte aufweisen, bei welchem jeweils eines oder mehrere direkt an den beiden Bremsbelägen angeordnete Absaugrohre einer Saugrohranordnung vorgesehen sind.

Es ist ferner vorgesehen, dass die Saugrohrranordnung wenigstens eine Schnittstelle zum Anschluss einer zur Scheibenbremse externen Absaug- und Abscheideeinrichtung aufweist. Diese wenigstens eine Schnittstelle kann auf verschiedenste Art ausgestaltet sein. Sie kann beispielsweise nach Art eine Rohrkupplungselementes ausgebildet sein, an welches dann ein anderes Kupplungselement an der Absaug- und Abscheideeinrichtung einfach angeschlossen werden kann. Die Schnittstelle kann aber auch als Rohrende ausgestaltet sein, auf das mit einer Schelle ein Rohrende der Absaug- und Abscheideeinrichtung befestigt werden kann.

Und es ist vorgesehen, dass die wenigstens eine Schnittstelle wenigstens ein längenveränderliches Element(en) aufweist. Dabei kann es sich insbesondere jeweils um einen längenveränderlichen Balg oder eine Tülle handeln. Derart können Bewegungen der Saugrohranordnungen, z.B. verursacht durch Scheiben- und/oder Belagverschleiß und/oder Zuspannbewegungen und/oder ein Rütteln an der Schnittstelle gut und einfach ausgeglichen und aufgenommen werden.

Derart wird jeweils ein sehr hoher Anteil des bei Bremsungen entstehenden Abriebs sicher aufgefangen.

Die nachfolgenden Weiterbildungen betreffen jeweils Merkmale, die am Belagsatz realisierbar sind und die aber auch unabhängig davon im eingebauten Zustand des Belagsatzes an der Scheibenbremse zusätzlich jeweils zu einer Weiterbildung der Scheibenbremse führen.

Nach einer ersten Weiterbildung ist vorgesehen, dass der jeweilige Bremsbelag und dass oder die an ihm angeordnete(n) Absaugrohr(e) eine vormontierte, wechselbare Einheit der Scheibenbremse bilden. Derart wird bei einem Belagwechsel auch Elemente des Saugrohranordnung erneuert, so dass die Funktion der Absaugung auch bei älteren Fahrzeugen gesichert bleibt. Zudem wird der Belagwechsel erleichtert, da es beim Belagwechsel nicht notwendig ist, an ihm die zur Absaugung vorgesehenen Rohrelemente zu montieren, da Bremsbelag und diese Rohrelemente als vormontierte Einheit bereitgestellt werden. Besonders einfach wird der Austausch der Beläge und der Absaugvorrichtung, wenn die Saugrohranordnung insgesamt oder im Wesentlichen (z.B. bis auf Schnittstellenelement(e) und die beiden Bremsbeläge insgesamt eine vormontierte, wechselbare Einheit der Scheibenbremse bilden.

Um einen hohen Anteil des Abriebes quasi am Ort der Entstehung desselben sicher abzusaugen, ist nach einer anderen Weiterbildung vorgesehen, dass die an den beiden Bremsbelägen jeweils angeordneten Absaugrohre eine oder mehrere Absaugöffnungen aufweisen und dass sie abschnittsweise oder vollständig umlaufend um die Reibbeläge gelegt sind. Durch diese konstruktive Ausbildung wird praktisch eine Kapselung der Reibflächen der Bremsbeläge erreichbar. Die Absaugeffizienz wird weiter optimiert.

Konstruktiv einfach und zudem hinsichtlich der Absaugeffizienz vorteilhaft ist ferner, wenn das jeweilige Absaugrohr mit Absaugöffnungen einen umfangsgeschlossenen Ring bildet, dessen Enden an ein Y-Rohrstück angesetzt sind oder angeformt sind.

Nach einer anderen Weiterbildung kann vorgesehen sein, dass das jeweilige Absaugrohr mit Absaugöffnungen an dem jeweiligen Bremsbelag beweglich geführt ist. Dies ermöglicht es, das Absaugrohr bei zunehmendem Belagverschleiß entsprechend der Abnahme der Dicke des Reibmaterials mitzubewegen.

Besonders vorteilhaft kann dieses nach einer weiteren Ausgestaltung quasi automatisiert geschehen, wenn das jeweilige Absaugrohr mit Absaugöffnungen an dem jeweiligen Bremsbelag mittels wenigstens einer Feder, insbesondere wenigstens einer Tellerfeder, beweglich geführt ist. Derart kann erreicht werden, dass das jeweilige Absaugrohr mit derVerschleißfläche des jeweiligen Bremsbelages abschließt und beim Andrücken der Bremsbeläge an der Bremsscheibe anliegt.

Hierzu kann ferner vorteilhaft nach einer Variante vorgesehen sein, dass ein Formschluss zwischen einem jeweiligen Führungsstift und einer Tellerfeder so ausgelegt ist, dass die Führungsstifte in deren Achsrichtung durch die Tellerfedern, mittels der Anpresskraft der Bremsbeläge, unidirektional in Verschleißrichtung und planparallel zur Verschleißfläche der Bremsbeläge, verschoben werden können. Wenn die Durchführung unidirektional ausgeführt ist, gibt beim Lösen der Bremse die Absaugeinrichtung das Lüftspiel wieder frei und es entsteht kein Restschleifmoment.

Bei einer anderen optionalen Weiterbildung ist vorgesehen, dass das jeweilige an den beiden Bremsbelägen umlaufend um das Belagmaterial geführte Absaugrohr an dem jeweiligen Bremsbelag ganz oder abschnittsweise mittels einem Abstreifer ganz oder abschnittsweise abgedeckt und/oder ummantelt ist. Derart kann einerseits mit einfachen Mitteln eine Geräuschminimierung erreicht werden. Zudem kann derart die Effizienz des Sammelns von Abrieb noch weiter verbessert werden.

Nach einer anderen Weiterbildung, welche auch als selbstständige Erfindung betrachtet werden kann, ist vorgesehen, dass die Saugrohrranordnung wenigstens eine Schnittstelle zum Anschluss einer zur Scheibenbremse externen Absaug- und Abscheideeinrichtung aufweist. Diese wenigstens eine Schnittstelle kann auf verschiedenste Art ausgestaltet sein. Sie kann beispielsweise nach Art eine Rohrkupplungselementes ausgebildet sein, an welches dann ein anderes Kupplungselement an der Absaug- und Abscheideeinrichtung einfach angeschlossen werden kann. Die Schnittstelle kann aber auch als Rohrende ausgestaltet sein, auf das mit einer Schelle ein Rohrende der Absaug- und Abscheideeinrichtung befestigt werden kann.

Nach einer vorteilhaften Weiterbildung kann vorgesehen sein, dass die wenigstens eine Schnittstelle wenigstens ein längenveränderliches Element, insbesondere einen längenveränderlichen Balg oder eine Tülle, aufweist. Derart können Bewegungen der Saugrohranordnungen, z.B. verursacht durch Scheiben- und/oder Belagverschleiß und/oder Zuspannbewegungen und/oder ein Rütteln an der Schnittstelle gut und einfach ausgeglichen und aufgenommen werden.

Die der Scheibenbremse nachgeschaltete Absaug- und Abscheidevorrichtung kann eine oder mehrere Abscheideeinrichtungen aufweisen, so beispielsweise einen in Richtung des Gehäuses zunächst angeordneten Grobstaub-Abscheider, durch den die belastete, abgesaugte Luft geführt wird hin zu einem Feinstaubfilter, der der Saugeinrichtung, vorzugsweise einem Sauggebläse, vorgeschaltet ist, während dem Sauggebläse nachgeordnet ein Schalldämpfer vorgesehen sein kann, durch den die insoweit gereinigte Luft ins Freie geführt wird.

Die Schaltung der Saugeinrichtung erfolgt zweckmäßigerweise über eine mit der Bremseinrichtung gekoppelte Schalteinheit, die so gesteuert ist, dass die Saugeinrichtung auch nach Beendigung der Bremsung eine gewisse Zeit in Betrieb ist. Bei nicht gebremster, freier Fahrt und nach der vorgegebenen Nachlaufzeit ist eine Absaugung nicht notwendig. Damit kann mit relativ geringen Absaugluftmengen eine wirksame Filterung erreicht werden, die sich vor allem durch geringe Betriebskosten auszeichnet.

Weitere vorteilhafte Ausbildungen der Erfindung werden in den Unteransprüchen gekennzeichnet.

Ein Ausführungsbeispiel der Erfindung wird nachfolgend anhand der beigefügten Zeichnungen beschrieben. Merkmale dieses Ausführungsbeispiels sind auch bei anderen nicht dargestellten Ausführungsbeispielen der Erfindung einzeln oder gemeinsam nutzbar. Die Erfindung ist nicht auf dieses Ausführungsbeispiel beschränkt, sondern im Rahmen der Ansprüche auch anders als dargestellt und insbesondere auch äquivalent umsetzbar. Es zeigen:
- **Fig.** 1: eine erfindungsgemäße Scheibenbremse in einer perspektivischen Vorderansicht;
- **Fig.** 2: einen Teil der Scheibenbremse in einer perspektivischen Rückansicht;
- **Fig.** 3: eine perspektivische Ansicht eines Bremsbelagsatzes einer Scheibenbremse beispielsweise nach Art der **Fig.** 1 und 2 mit zwei Belägen und einer Saugrohranordnung;
- **Fig.** 4: die Elemente aus **Fig.** 3 in einer explosionsartigen Darstellung;
- **Fig.** 5: in a) und b) verschiedene Ansichten eines Schnittstellenelementes der Saugrohranordnung;
- **Fig.** 6: eine Seitenansicht eines Teilbereiches des Belagsatzes aus **Fig.** 3 mit Elementen der Saugrohranordnung;
- **Fig.** 7: eine Schnittansicht des Belagsatzes aus **Fig.** 3 mit Elementen der Saugrohranordnung;
- **Fig.** 8: eine Detailansicht A der Schnittansicht aus **Fig.** 7;
- **Fig.** 9: eine Draufsicht auf die Scheibenbremse der **Fig.** 1 und 2 und gleichzeitig eine Schnittansicht durch eine Schnittstelle Faltenbalg/Y-Anschluss;
- **Fig.** 10 -12: verschiedene Ansichten einzelner Komponenten der Saugrohranordnung; und
- **Fig.** 13 - 14: weitere Bremsbelagsätze.

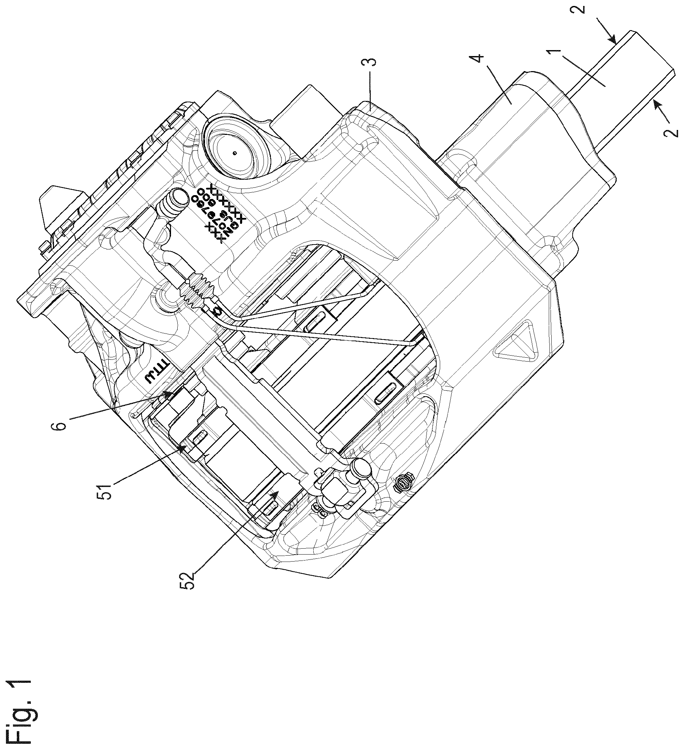

In der **Fig.** 1 ist eine Scheibenbremse gezeigt, mit einem eine Bremsscheibe 1 übergreifenden, hier rahmenartigen Bremssattel 3. Dieser Bremssattel 3 ist hier beweglich, insbesondere verschieblich an einem Bremsträger 4 angeordnet, welcher an einem Schenkel einer Fahrzeugachse (hier nicht dargestellt) befestigbar ist. Der Bremsträger 4 ist optional. Der Bremssattel 3 kann im Rahmen der Erfindung beispielsweise als Schwenksattel, Schiebesattel oder Festsattel (ohne Bremsträger) ausgebildet sein.

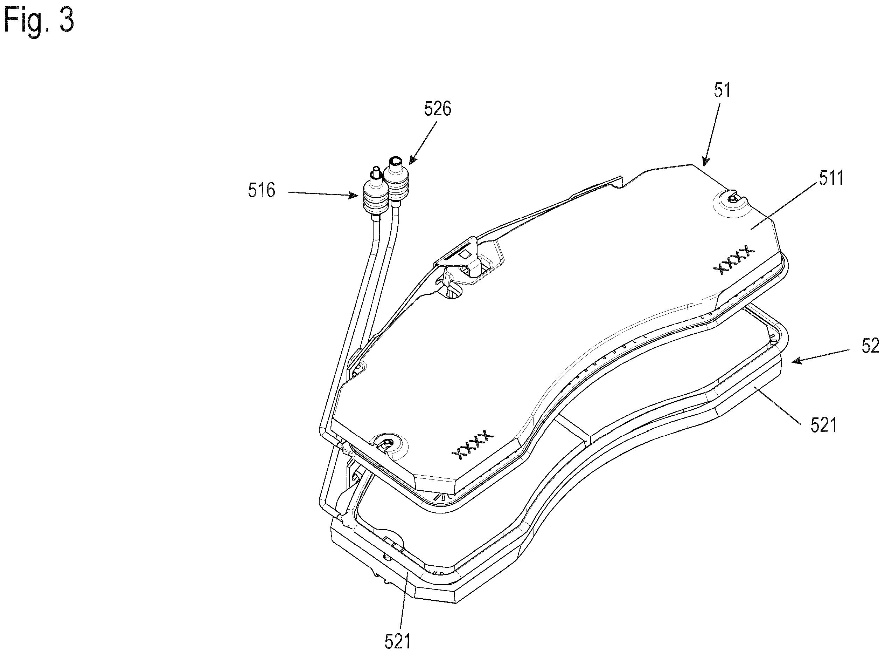

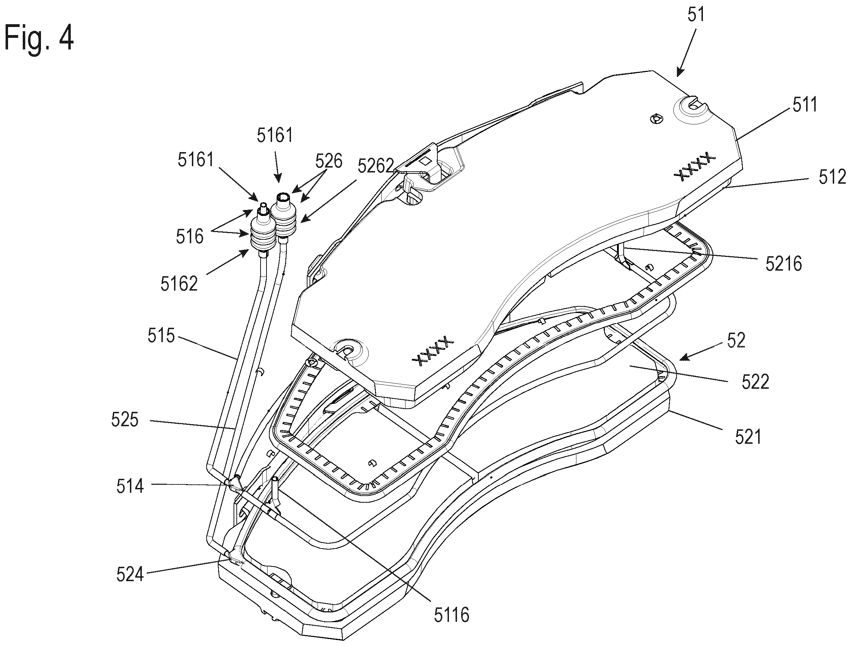

In dem Bremssattel 3 und ggf. in dem Bremsträger 4 sind beidseits der Bremsscheibe 1 jeweils Bremsbeläge 51, 52 angeordnet. Diese Bremsbeläge weisen jeweils eine Rückenplatte 511, 521 und einen Reibbelag 512, 522 auf (**Fig.** 3, 4).

Der Bremssattel 3 weist hier eine zentrale Öffnung 6 oberhalb der Bremsscheibe 1 auf, durch welche die Bremsbeläge 51, 52 montierbar und demontierbar sind, insbesondere, um sie bei einem Belagwechsel auszutauschen.

Die Bremsbeläge 51, 52 sind bei Bremsungen jeweils mit ihrem Reibbelag 512, 522 beidseitig an Reibringflächen 2 (**Fig. 1**) der vorzugsweise innenbelüfteten Bremsscheibe 1 anpressbar. Dazu ist der Scheibenbremse ein Aktuator (hier nicht dargestellt) zugeordnet. Dieser kann ein Elektromotor sein oder ein Pneumatik- oder ein Hydraulik- und/oder ein Federaktuator. Dieser Aktuator kann über eine Zuspannmechanik - hier im Inneren des Bremssattels 3 - auf einen oder beide Reibbeläge 51, 52 einwirken, um diese gegen die Bremsscheibe 1 zu drücken. Bei einer Schiebesattelbremse wird insofern beispielsweise der eine der beiden Bremsbeläge 51, 52 gegen die Bremsscheibe 1 gedrückt, während der andere der beiden Bremsbeläge 51, 52 mit dem Bremssattel 3 gegen die andere Seite der Bremsscheibe 1 gezogen wird. Die Zuspannmechanik umfasst ferner eine Nachstelleinrichtung zum Einstellen des Lüftspiels, das sich infolge von Belag- und Scheibenverschleiß im Betrieb verändert.

Bei den Bremsungen wird das zwischen den Bremsungen vorhandene Lüftspiel bzw. der jeweilige Spalt zwischen den Bremsbelägen 51, 52 und der Bremsscheibe 1 überwunden. Infolge der entstehenden Reibung tritt bei Bremsungen an den Reibbelägen 51, 52 und auch an der Bremsscheibe 1 Abrieb auf.

Dieser Abrieb wird erfindungsgemäß direkt an den Bremsbelägen 51, 52 im Bereich der Anlagefläche des jeweiligen Reibbelages 51, 52 an der Bremsscheibe 1 abgesaugt. Derart wird diese Scheibenbremse in Hinsicht auf den Abrieb auch höchsten Anforderungen an den Umweltschutz gerecht.

Ergänzend ist am Fahrzeug, dass mit der Scheibenbremse ausgerüstet wird, wenigstens eine Absaug- und Abscheideanlage, vorgesehen (hier nicht dargestellt), die ein hier nicht dargestelltes Sauggebläse oder dgl. aufweisen kann, mit welchen der Abrieb zu einer Entstaubungsvorrichtung geführt wird. Diese kann eine oder mehrere Abscheide- und/oder Filterstufen aufweisen. Die austretende abriebfreie Luft kann beispielsweise über einen dem Sauggebläse nachgeordneten Schalldämpfer in die Umgebung abgegeben werden. Der Abrieb wird gesammelt und separat entsorgt.

Die Absaug- und Abscheideanlage außerhalb der Scheibenbremse am Fahrzeug kann für eine oder mehrere der Scheibenbremsen des Fahrzeuges ausgelegt sein bzw. genutzt werden. Beispielhaft sei auf die EP 2 585 730 B1 verwiesen, welche Komponenten einer solchen Anlage offenbart.

Das Sammeln des Abriebs direkt am Ort der Entstehung, also an der einzelnen Scheibenbremse erfolgt mittels einer in die Scheibenbremse integrierten, wechselbaren Saugrohranordnung, welche dazu ausgelegt ist, den Abrieb direkt an der Kontaktfläche zwischen der Bremsscheibe 1 und dem jeweiligen Reibbelag 511, 521 zu sammeln.

Ein Teil dieser Saugrohranordnung kann besonders vorteilhaft direkt in die beiden Bremsbeläge 51, 52 integriert sein. Es kann auch vorgesehen sein, dass die beiden Bremsbeläge 51, 52 mit der Saugrohranordnung eine vormontierte Einheit bildet, die bei einem Bremsbelagwechsel weitgehend oder sogar vollständig mit den Bremsbelägen 51, 52 gewechselt wird.

Es ist auch denkbar, dass die einzelnen Bremsbeläge 51, 52 jeweils mit ihrer Rohrleitung einzeln eine vormontierte Bremsbelageinheit bilden, wobei diesen beiden vormontierten Bremsbeläge dann zunächst bei einem Wechsel montiert werden, woraufhin dann weitere Elemente der Saugrohranordnung montiert werden. Auch dies ermöglicht einen vorteilhaften Belagwechsel.

Es kann (siehe **Fig**. 3 und 4) vorgesehen sein, dass jeder der Bremsbeläge 51, 52 ein direkt dem jeweiligen Bremsbelag 51, 52 zugeordnetes, insbesondere in diesen integriertes Absaugrohr 513, 523 aufweist. Die beiden Absaugrohre 513, 523 der Saugrohranordnung der beiden Bremsbeläge 51, 52 können an einem Ort der Scheibenbremse zusammengeführt werden. Sie können beispielsweise über ein Y-Stück 514 der Saugrohranordnung und eines oder mehrere optionale Zwischenrohre 515, 525 in oder dgl. in einer jeweiligen oder gemeinsamen ersten Schnittstelle 516, 526 der Saugrohranordnung enden. Diese erste Schnittstelle 516, 526 kann zum Anschluss von korrespondierenden Elementen der wiederum vorzugsweise externen Absaug- und Abscheideanlage dienen oder zum Anschluss eines Zwischenstücks, das nachfolgend als zweite Schnittstelle 7 bezeichnet wird.

Da die Saugrohranordnung bei einem Belagwechsel mit gewechselt wird, wird diese Absaugung des Abriebes durch insoweit neue oder gereinigte Elemente nach dem Belagwechsel besonders vorteilhaft gesichert.

Vorzugsweise ist das jeweilige Absaugrohr 513, 523 derart ausgebildet, dass es den jeweiligen Reibbelag 512, 522 des jeweiligen Bremsbelages 51, 52 ganz oder abschnittsweise rahmenartig umgibt.

Die Rückenplatte 511, 512 des jeweiligen Bremsbelages 51, 52 kann jeweils an ihrer zum Reibbelag 512, 522 gewandten Seite größer ausgebildet sein als der Reibbelag 51, 52, so dass den Reibbelag 51, 52 ein umlaufender Rückenplattenrandbereich 5221 umgibt. Das jeweilige Absaugrohr 513, 523 kann beispielsweise vorteilhaft auf dem Randbereich, insbesondere auf einem vollständig um den jeweiligen Reibbelag umlaufenden Randbereich 5121 der jeweiligen Rückenplatte 511, 521 ausgebildet sein. In den Randbereich 5121 kann auch eine ganz oder teilweise umlaufende Nut ausgebildet sein oder ein Absatz ausgebildet sein, in welchen das Absaugrohr zumindest bei zunehmendem Verschleiß eingreift (hier nicht dargestellt).

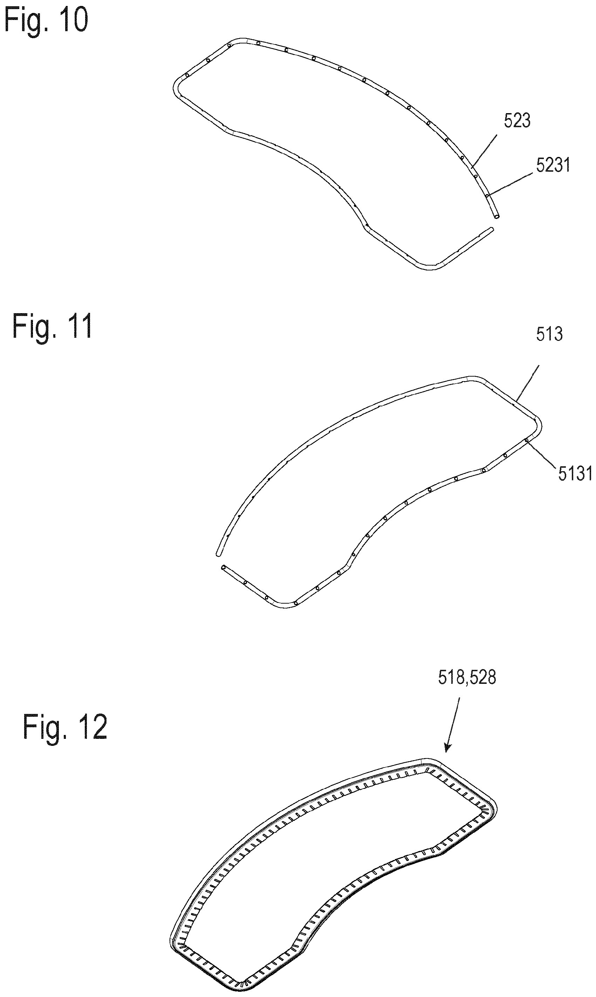

Das jeweilige Absaugrohr 513, 523 kann Absaugöffnungen 5131, 5231 aufweisen, beispielsweise mehrere zueinander beabstandete Öffnungen, die als Absaugöffnungen dienen. Diese Absaugöffnungen 5131, 5231 können zur Bremsscheibe 1 gewandt sein (siehe Fig. 10 und 11).

Das jeweilige Absaugrohr 513, 523 kann jeweils der Kontur des Umfangsrandes umlaufend um den Reibbelag 512, 522 folgen. Es kann mit den Absaugöffnungen 5131, 5231 wie Schlitzen oder kleinen Löchern versehen sein.

Das jeweilige Absaugrohr 513, 523 verläuft somit vorzugsweise umlaufend um den jeweiligen Reibbelag. Die beiden Enden der umlaufenden Absaugrohre 513, 523 können dann in dem Y- bzw. T-Stück 514, 524 enden. Derart wird ein Ansaugring gebildet. Von dem jeweiligen ersten Y-Stück 514, 524 können sodann jeweils die Rohrabschnitte 515, 525 bis zu dem jeweiligen ersten Schnittstellenelement 516, 526 führen. Derart kann der Bremsstaub direkt am Entstehungsort abgesaugt und gesammelt werden.

Das jeweilige Absaugrohr 513, 523 kann beweglich an dem jeweiligen Bremsbelag 51, 52 angeordnet sein. So kann vorgesehen sein, dass die Absaugrohre 513, 523 jeweils mittels einer oder mehrerer Federn beweglich an dem jeweiligen Bremsbelag 51, 52 angeordnet ist. Es kann dabei vorgesehen sein, dass das jeweilige Absaugrohr 513, 523 - gegen die Kraft der einen oder der mehreren Federn - senkrecht zur Reibfläche des jeweiligen Bremsbelages 51, 52 beweglich ist. Derart kann das jeweilige Absaugrohr 513, 523 jeweils bis ganz an oder nahe an die zur Bremsscheibe 1 gewandte Reibfläche des jeweiligen Reibbelages 512, 522 und die jeweilige Reibringfläche 2 bewegt werden und bei zunehmendem Belagverschleiß zurück in Richtung der Rückenplatte 511, 521 mitwandern ohne selbst zerstört zu werden.

Um zu gewährleisten, dass das Absaugrohr 513, 523 stets direkt oder nahezu direkt an der Kontaktfläche der Reibpaarung anliegt, jedoch beim Lösen der Bremse nicht mehr an der Bremsscheibe schleift, ist - wie bereits kurz erwähnt - vorzugsweise nach einer Weiterbildung vorgesehen, dass diese mit der Verschleißfläche des Bremsbelags 51, 52 mitwandert.

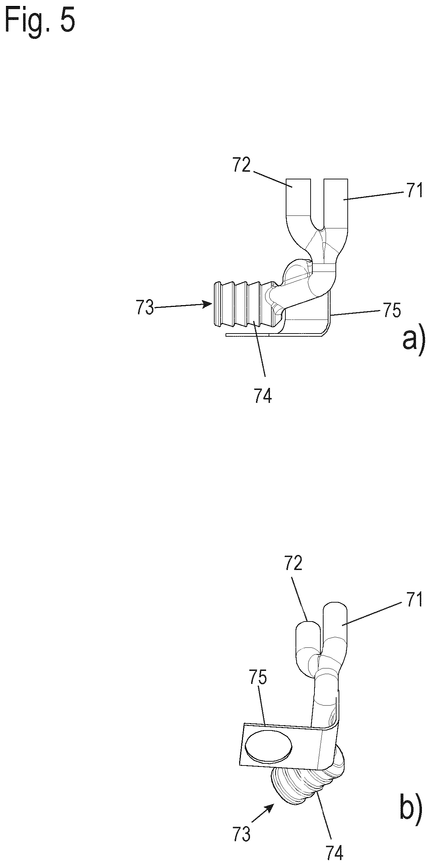

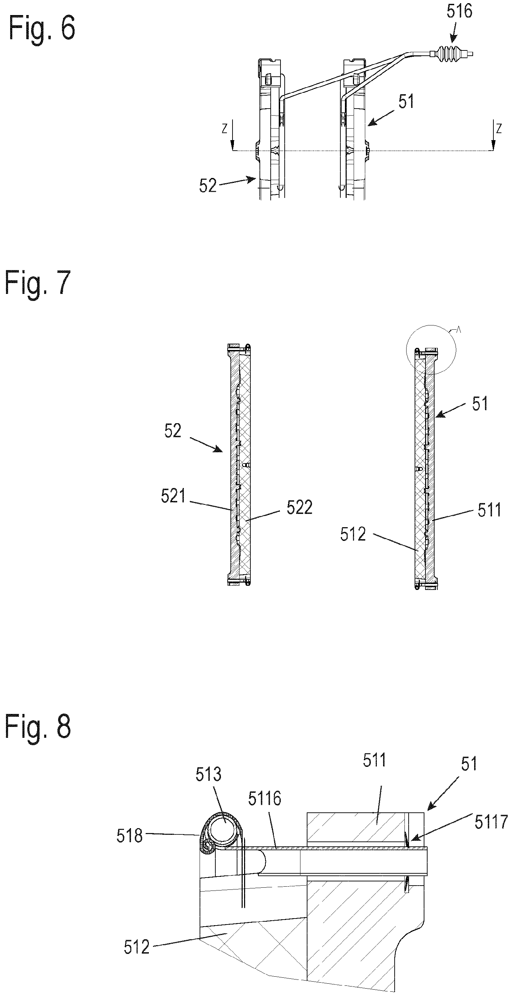

Hierzu können an dem Absaugrohr 513, 523 jeweils einer oder mehrere Führungsstifte 5116, 5216 (siehe auch **Fig.** 4 sowie insbesondere **Fig.** 5 und 6) angebracht sein, die in Tellerfedern 5117, 5217 einseitig verschiebbar gelagert sind. Die Tellerfedern 5117, 5217 können in einer Tasche in der Belagträgerplatte des jeweiligen Bremsbelags 51, 52 in Achsrichtung der Führungsstifte 5116, 5216 fixiert sein. Durch die Geometrie der Tellerfedern 5117, 5217 kann die Einheit bei Kontakt mit der Bremsscheibe in Verschleißrichtung des Bremsbelags 51,52 geschoben werden.

In die Gegenrichtung klemmt die Tellerfeder 5117, 5217 vorzugsweise den Führungsstift 5116, 5216, indem mittels Reibung die Kante der Tellerfeder 5117, 5217 in den äußeren Umfang des Führungsstiftes 5116, 5216, gedrückt wird.

Um eine bessere Abdichtung zur Kontaktfläche Bremsbelag 51, 52 zur Bremsscheibe 2 zu erreichen, können dieAbsaugrohre ganz oder teilweise mit einem Abstreifer 518, 528 bedeckt oder sogar ummantelt werden (**Fig.** 6, **Fig.** 12).

Bei entsprechend großer Saugleistung kann der Abstreifer 518, 528 auch durch punktuelle Abstandshalter ersetzt werden. Außerdem übernimmt der Abstreifer 518, 528 ggf. die Funktionen Verschleiß und Dämpfung der umlaufenden Absaugrohre 513, 523.

Ohne den Abstreifer 518, 528 würde der Schleifkontakt bei der Bremsbetätigung einen hohen Verschleiß an den Absaugrohren 513, 523 verursachen. Ebenso könnten die umlaufenden Absaugrohre 513, 523 in Schwingung versetzt werden und dementsprechend Geräusche verursachen. Der jeweilige Abstreifer 518, 528 kann rahmenartig ausgebildet sein (Fig. 12).

Der jeweilige Abstreifer 518, 528 kann aus hochfestem, temperarturbeständigem Gewebe bestehen. Diese können je nach Gewebetyp, Temperaturen von ca. >650°C bis <1200°C standhalten. Es kommen beispielsweise Glasfaser-, CFC-, Silikat- und Keramikgewebe unterschiedlichster Armierung für diese Aufgabe in Frage. Für Standardapplikationen kann eine Temperaturbeständigkeit bis 650°C ausreichend sein. Das Gewebe kann umlaufend vernäht oder mittels Klammern an den Absaugrohren 513, 523 befestigt werden.

Die Absaugrohre 513, 523 weisen vorzugsweise Absaugöffnungen 5131, 5231 auf, die mit einem möglichst geringen Spalt zur Kontaktfläche des Bremsbelags 51, 52 zur Bremsscheibe 1 angebracht sind. Position, Form und Größe der Absaugöffnungen 5131, 5231 sind vorteilhaft vorzugsweise so ausgelegt, dass der maximale Absaugeffekt an der Stelle der größten Bremsstaubentwicklung erzielt wird.

Die Rohrelemente können mittels Presspassung spaltfrei gesteckt, bzw. gegebenenfalls angeschweißt werden.

Das jeweilige erste Schnittstellenelement 516, 526 kann einen Anschlussabschnitt 5161, 5261 und eine längenveränderliche Einheit mit einem Balg 5162, 5262 aufweisen. Das jeweilige erste Schnittstellenelement 516, 526 kann eine erste Schnittstelle zu einem zweiten Schnittstellenelement 7 zur Absaug- und Abscheideanlage darstellen.

Es kann vorgesehen sein, dass dieses zweite Schnittstellenelement 7 einen Teil des vormontierten Brensbelagsatzes bildet. Es kann aber auch vorgesehen sein, dass dieses zweite Schnittstellenelement 7 beim Belagwechsel nicht getauscht wird.

Das zweite Schnittstellenelement 7 weist hier in Hinsicht auf die Fluidleitungsfunktion eine Y- oder T-Geometrie auf. Es weist daher zwei Eingangsanschlüsse 71, 72 für die beiden Anschlussabschnitte 5161, 5261 der ersten Schnittstellen auf und es weist einen Ausgangsanschluss 73 zu einem korrespondierenden Anschluss der Absaug- und Abscheideanlage auf. Es kann ferner einen Tüllenabschnitt 74 aufweisen. Zudem kann es einen Befestigungsabschnitt 75 wie beispielsweise eine gelochte Blechlasche aufweisen. An dem Befestigungsabschnitt 75 kann das zweite Schnittstellenelement an der Scheibenbremse, insbesondere an dem Bremssattel oder dgl. befestigt werden, beispielsweise mit einer Schraube. Es kann auch an einem Aktor wie einem Bremszylinder befestigt werden. In dem zweiten Schnittstellenelement 7 laufen die Absaugrohranordnungen und die ersten Schnittstellen der beiden Bremsbeläge 51, 52 zusammen. Es bildet die Schnittstelle zu der nachgeschalteten Absauge- und Abscheideanlage.

Es kann vorgesehen sein, dass der Ausgangsanschluss 73 nach Art eines handelsüblichen Schlauchanschlusses ausgebildet ist, z.B. nach Art einer Steckverbindung oder Kupplung, etc.

Im abgebildeten Ausführungsbeispiel wurde die zweite Schnittstelle 7 für eine Schlauchschellenbefestigung ausgelegt. Das Schnittstellenelement 7 wird vorzugsweise an einer Bremszylinderschnittstelle der Scheibenbremse 1 befestigt, insbesondere verschraubt (Fig.1). Dadurch dass die restliche Ansaugvorrichtung direkt am jeweiligen Bremsbelag 51, 52 angebracht ist, kann diese auch als Nachrüstsatz bereits im Feld betriebener Bremsen verwendet werden.

Vorteilhaft ist, dass auch die erste Schnittstelle mit einem Längenausgleich versehen wird. In dem dargestellten Ausführungsbeispiel ist der Längenausgleich über eine Spielpassung dargestellt worden, die jeweils mit dem flexiblen Balg 5162, 5262 ummantelt ist.

Idealerweise wird als Material für den Balg 5162, 5262 NBR oder Silicon verwendet. Hierbei kann eine geschlitzte Buchse in die Verbindungsenden des Balgs derart umspritzt werden, dass das die geschlitzte Buchse ummantelnde NBR bzw. Silikon zur Abdichtung der Anschlüsse Saugrohre 5153, 525 zu Balg 5162, 5262 und Tüllenabschnitt 74 zu Balg 5162, 5262 verwendet wird. Die Spielpassung der Steckverbindung zum Tüllenabschnitt wird vorteilhaft so groß gewählt werden, dass die durch Rüttelbelastung in den jeweiligen Bremsbelag 51, 52 übertragenen Schwingungsamplitude mit der Spielpassung ausgeglichen wird.

Ebenso ist zu beachten, dass die Bälge 5162, 5262 in der Lage sein sollten/sind, den über den Bremsscheibenverschleiß entstehenden Verschleißweg auszugleichen, da der Belagverschleiß durch die Schnittstelle 5116/5117 ausgeglichen wird

Dabei kann das an den reaktionsseitigen Bremsbelag 52 angebundene Saugrohr 525 über den Verschleiß des Bremsbelags 52 weiter in den ihm zugeordneten Balg 5262 eintauchen, wohingegen sich das an den innenseitigen/aktionsseitigen Bremsbelag 51 angebundene Saugrohr 515 in dem ihm zugeordneten Balg 5162 entgegen bewegt. Es wird vorzugsweise über den gesamten Verschleiß der Bremsbeläge 51, 52 gewährleistet, dass der jeweilige Balg 5162, 5262, der bei applizierten Saugdruck zusammengezogen wird, sich an die Saugrohre 515, 525 anlegen kann, ohne dabei die Öffnung zur zweiten Schnittstelle zu verschließen.

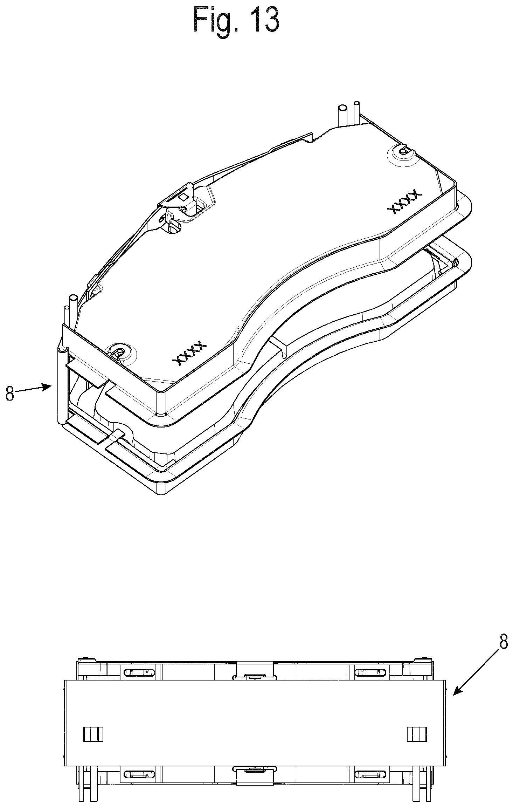

Hinsichtlich der geometrischen Ausführung und Anbindung an das Gesamtsystem, werden im Folgenden weitere Ausführungsvarianten beschrieben. Die Ausführungsvariante nach **Fig.** 13 zeigt einzeln an einem Träger- und ein Abdeckblech 8 angebrachte Saugrohre 515, 525. Das Träger- und ein Abdeckblech 8 kann einen Bereich zwischen den Bremsbelägen zur Öffnung 6 hin abdecken. Der Vorteil dieser Variante besteht darin, dass die Trägerbleche den Korrosionsschutz zwischen Bremsträger Horn und Bremsbelag als zusätzliche Funktion mit abdecken.

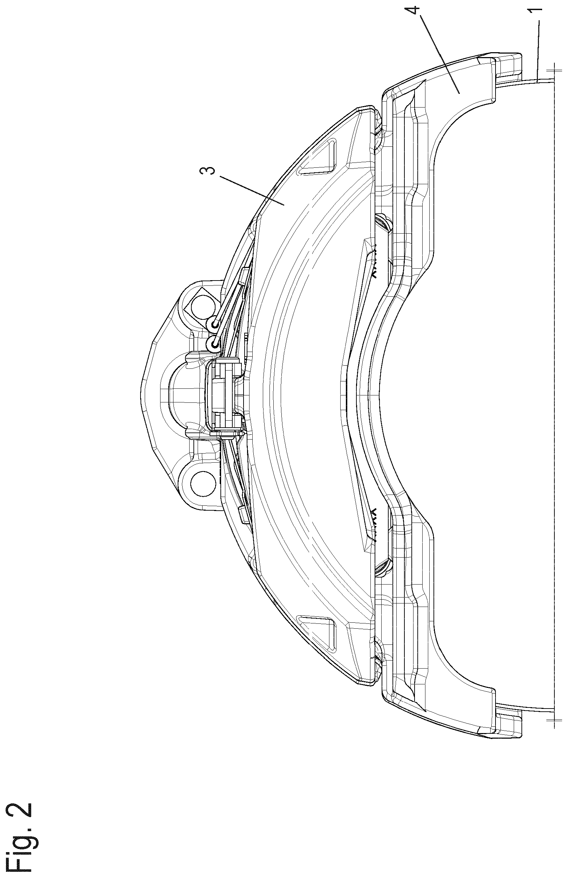

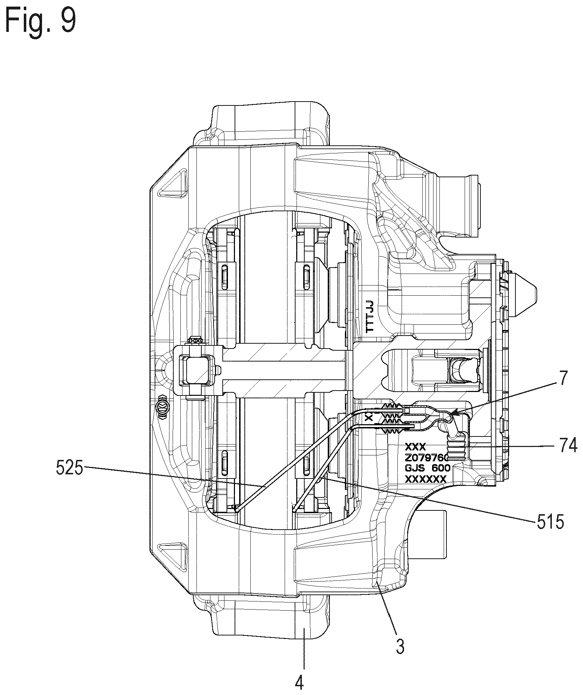

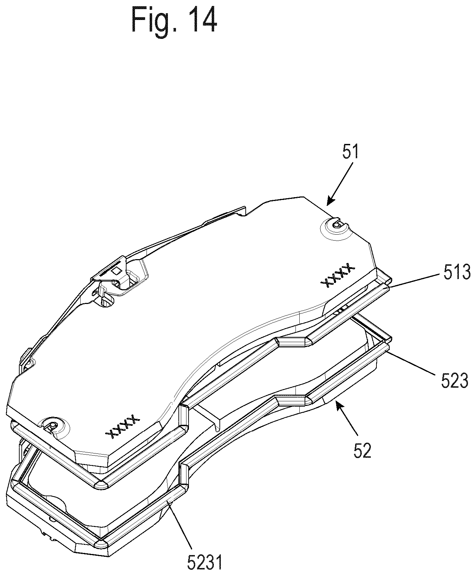

Die in **Fig.** 14 gezeigte Ausführungsvariante zeigt eine weitere Variante und implizit ein Fertigungsverfahren der umlaufenden Saugrohre 513, 523. Hierbei werden diese aus gezogenen oder gebogenen Profilen hergestellt, die einen dünnen Spalt als Absaugöffnung 5231 zur Kontaktfläche zwischen Bremsscheibe und Bremsbelag 51, 52 aufweisen, durch den der Bremsstaub abgesaugt wird. Das Profil kann aus einzelnen Elementen bestehen, die mittels Steckverbindungen an den Ecken abgedichtet werden. Oder es wird gebogen und die dabei entstehenden Eckenentlastungen durchAbdeckelemente (geklippt/geschweißt) verschlossen. Beide Ausführungsalternativen können wie bei der Variante der Fig. 1 bis 13 den Verschleißweg mittels Führungsstiften/Tellerfeder Verbindung ausgleichen.

### Bezugszeichenliste

1 Bremsscheibe
2 Reibringflächen
3 Bremssattel
4 Bremsträger
51, 52 Bremsbeläge
511, 521 Rückenplatte
512, 522 Reibbelag
513523 Absaugrohr
514, 524 Y-Stück
515, 525 Zwischenrohre
5221 Rückenplattenrandbereich
5131, 5231 Absaugöffnungen
516, 526 Schnittstellenelement
5161, 5261 Anschlussabschnitt
5162, 5262 Balg
5116, 5216 Führungsstifte
5117, 5217 Tellerfedern
518, 528 Abstreifer
6 Öffnung
7 zweites Schnittstellenelement
71, 72 Eingangsanschlüsse
73 Ausgangsanschluss
74 Tüllenabschnitt
75 Befestigungsabschnitt
8 Abdeckblech

## Patentansprüche

1. Scheibenbremse, mit einem eine Bremsscheibe (1) übergreifenden Bremssattel (3), in dem jeweils mit einem Reibbelag (512, 522) und einer Rückenplatte (511, 521) versehene Bremsbeläge (51, 52) angeordnet sind, die jeweils mit ihrem Reibbelag (512, 522) beidseitig an Reibringflächen (2) der Bremsscheibe (1) anpressbar sind, und mit einer Saugrohranordnung zum Absaugen von bei Bremsungen entstehenden Abrieb, wobei die Saugrohranordnung eines oder mehrere direkt an den beiden Bremsbelägen (51, 52) angeordnete Absaugrohre (513, 523) umfasst, und dass die Saugrohrranordnung wenigstens eine Schnittstelle zum Anschluss einer zur Scheibenbremse externen Absaug- und Abscheideeinrichtung aufweist, **dadurch gekennzeichnet, dass** die Schnittstelle wenigstens eines oder mehrere längenveränderliche Einheiten und/oder Elemente, insbesondere einen längenveränderlichen Balg und/oder ein längenveränderliches Tüllenelement (74), aufweist, die zur Aufnahme von Bewegungen, insbesondere von durch Belag- und Scheibenverschleiß bedingten Bewegungen der Saugrohranordnung dienen.

2. Scheibenbremse nach Anspruch 1, **dadurch gekennzeichnet, dass** der jeweilige Bremsbelag und dass oder die an ihm angeordnete(n) Absaugrohre (513, 523) eine vormontierte, wechselbare Einheit der Scheibenbremse bilden.

3. Scheibenbremse nach Anspruch 1 oder 2, **dadurch gekennzeichnet, dass** die Saugrohranordnung mit den Absaugrohren (513, 523) und die beiden Bremsbeläge (51, 52) eine vormontierte, wechselbare Einheit der Scheibenbremse bilden.

4. Scheibenbremse nach Anspruch 1 oder 2, **dadurch gekennzeichnet, dass** die an den beiden Bremsbelägen (51, 52) angeordneten Absaugrohre (5134, 523) eine oder mehrere Absaugöffnungen (5131, 5231) aufweisen und dass sie abschnittsweise oder vollständig umlaufend um die Reibbeläge (512, 522) gelegt sind.

5. Scheibenbremse nach einem der vorstehenden Ansprüche, **dadurch gekennzeichnet, dass** die jeweiligen Absaugrohre (5134, 523) eine oder mehrere Absaugöffnungen (5131, 5231) einen Ring bilden, der durch ein Y-Rohrstück abgeschlossen wird.

6. Scheibenbremse nach einem der vorstehenden Ansprüche, **dadurch gekennzeichnet, dass** das jeweilige Absaugrohr (513, 523) mit Absaugöffnungen (5131, 5231) an dem jeweiligen Bremsbelag (51, 52) beweglich geführt ist.

7. Scheibenbremse nach dem vorstehenden Anspruch, **dadurch gekennzeichnet, dass** das jeweilige Absaugrohr (513, 523) mit Absaugöffnungen (5131, 5231) an dem jeweiligen Bremsbelag (51, 52) mittels wenigstens einer Feder, insbesondere wenigstens einer Tellerfeder (5117, 5217), beweglich geführt ist.

8. Scheibenbremse nach dem vorstehenden Anspruch, **dadurch gekennzeichnet, dass** das jeweilige Absaugrohr (513, 523) mit der Verschleißfläche des jeweiligen Bremsbelages (51, 52) abschließt und beim Andrücken der Bremsbeläge an der Bremsscheibe (1) anliegt.

9. Scheibenbremse nach einem der vorstehenden Ansprüche, **dadurch gekennzeichnet, dass** ein Formschluss zwischen einem jeweiligen Führungsstift (5116, 5226) und der Tellerfeder (5117, 5217) an den beiden Bremsbelägen (51, 52) so ausgelegt ist, dass die Führungsstifte (5116, 5226) in deren Achsrichtung durch die jeweilige Tellerfeder (5117, 5217), mittels der Anpresskraft der Bremsbeläge (51, 52), unidirektional in Verschleißrichtung und planparallel zur Verschleißfläche der Bremsbeläge (51, 52), verschoben werden können.

10. Scheibenbremse nach einem der vorstehenden Ansprüche, **dadurch gekennzeichnet, dass** das jeweilige an den beiden Bremsbelägen (51, 52) umlaufend um das Belagmaterial geführte Absaugrohr (513, 523) an dem jeweiligen Bremsbelag ganz oder abschnittsweise mittels einem Abstreifer (518, 528) abgedeckt und/oder ummantelt ist.

11. Bremsbelagsatz für eine Scheibenbremse nach einem der vorstehenden Ansprüche, mit zwei Bremsbelägen (51, 52), die jeweils einen Reibbelag (512, 522) und eine Rückenplatte (511, 521) aufweisen, **und mit einem** oder mehreren direkt an den beiden Bremsbelägen (51, 52) angeordneten Absaugrohren (513, 523) einer Saugrohranordnung, wobei die Saugrohranordnung eine oder mehrere Schnittstellen mit einem oder mehreren längenveränderlichen Elementen aufweist.

12. Bremsbelagsatz nach dem vorstehenden Anspruch, **dadurch gekennzeichnet, dass** der jeweilige Bremsbelag (51, 52) und das oder die an ihm angeordnete(n) Anasaugrohr (513, 523) jeweils eine vormontierte, wechselbare Einheit der Scheibenbremse bilden oder dass die Saugrohranordnung und die beiden Bremsbeläge (51, 52) eine insgesamt vormontierte, wechselbare Einheit der Scheibenbremse bilden.

13. Bremsbelagsatz nach Anspruch 11 oder 12, **dadurch gekennzeichnet, dass** an den beiden Bremsbelägen (51, 52) jeweils ein Absaugrohr (513, 523) mit Absaugöffnungen (5131, 5231) der Saugrohranordnung abschnittsweise oder vollständig umlaufend um das Belagmaterial gelegt ist.

14. Bremsbelagsatz nach dem vorstehenden Anspruch, **dadurch gekennzeichnet, dass** die jeweiligen Absaugrohre (5134, 523) eine oder mehrere Absaugöffnungen (5131, 5231) einen Ring bilden, der durch ein Y-Rohrstück abgeschlossen wird.

15. Bremsbelagsatz nach einem der vorstehenden Ansprüche, **dadurch gekennzeichnet, dass** das jeweilige Absaugrohr (513, 523) mit Absaugöffnungen (5131, 5231) an dem jeweiligen Bremsbelag (51, 52) beweglich geführt ist.

16. Bremsbelagsatz nach dem vorstehenden Anspruch, **dadurch gekennzeichnet, dass** das jeweilige Absaugrohr (513, 523) mit Absaugöffnungen (5131, 5231) an dem jeweiligen Bremsbelag (51, 52) mittels wenigstens einer Feder, insbesondere wenigstens einer Tellerfeder (5117, 5217), beweglich geführt ist.

17. Bremsbelagsatz nach einem der vorstehenden Ansprüche, **dadurch gekennzeichnet, dass** das jeweilige an den beiden Bremsbelägen (51, 52) umlaufend um das Belagmaterial geführte Absaugrohr (513, 523) an dem jeweiligen Bremsbelag ganz oder abschnittsweise mittels einer Abstreifeinrichtung (518, 528) abgedeckt und/oder ummantelt ist.

## Claims

1. Disc brake, with a brake caliper (3) engaging over a brake disc (1), in which brake pads (51, 52) provided respectively with a friction lining (512, 522) and a back plate (511, 521) are arranged, which brake pads can be pressed respectively with their friction lining (512, 522) on both sides against friction ring surfaces (2) of the brake disc (1), and with a suction pipe arrangement for extracting abrasion material produced during braking, wherein the suction pipe arrangement comprises one or more suction pipes (513, 523) arranged directly on the two brake pads (51, 52), and in that the suction pipe arrangement has at least one interface for connecting an extraction and separation device external to the disc brake, **characterized in that** the interface has at least one or more length-variable units and/or elements, in particular length-variable bellows and/or a length-variable sleeve element (74), which are used to absorb movements of the suction pipe arrangement caused in particular by pad and disc wear.

2. Disc brake according to claim 1, **characterized in that** the respective brake pad and/or the suction pipes (513, 523) arranged thereon form a preassembled, replaceable unit of the disc brake.

3. Disc brake according to claim 1 or 2, **characterized in that** the suction pipe arrangement with the suction pipes (513, 523) and the two brake pads (51, 52) form a preassembled, replaceable unit of the disc brake.

4. Disc brake according to claim 1 or 2, **characterized in that** the suction pipes (5134, 523) arranged on the two brake pads (51, 52) have one or more suction openings (5131, 5231) and **in that** they are placed in some sections or fully circumferentially around the friction linings (512, 522).

5. Disc brake according to any one of the preceding claims, **characterized in that** the respective suction pipes (5134, 523) one or more suction openings (5131, 5231) form a ring, which is closed off by a Y-shaped pipe section.

6. Disc brake according to any one of the preceding claims, **characterized in that** the respective suction pipe (513, 523) with suction openings (5131, 5231) is guided movably on the respective brake pad (51, 52).

7. Disc brake according to the preceding claim, **characterized in that** the respective suction pipe (513, 523) with suction openings (5131, 5231) is guided movably on the respective brake pad (51, 52) by means of at least one spring, in particular at least one disc spring (5117, 5217).

8. Disc brake according to the preceding claim, **characterized in that** the respective suction pipe (513, 523) terminates with the wear surface of the respective brake pad (51, 52) and bears against the brake disc (1) when the brake pads are pressed against it.

9. Disc brake according to any one of the preceding claims, **characterized in that** a positive fit between a respective guide pin (5116, 5226) and the disc spring (5117, 5217) on the two brake pads (51, 52) is configured so that the guide pins (5116, 5226) can be displaced in their axial direction by the respective disc spring (5117, 5217), by means of the contact pressure of the brake pads (51, 52), unidirectionally in the direction of wear and planar parallel to the wear surface of the brake pads (51, 52).

10. Disc brake according to any one of the preceding claims, **characterized in that** the respective suction pipe (513, 523) which is guided around the lining material on the two brake pads (51,52) is covered and/or sheathed on the respective brake pad fully or in some sections by means of a wiper (518, 528).

11. Brake pad set for a disc brake according to any one of the preceding claims, with two brake pads (51, 52), which each have a friction lining (512, 522) and a back plate (511, 521), **and with** one or more suction pipes (513, 523) of a suction pipe arrangement arranged directly on the two brake pads (51, 52), wherein the suction pipe arrangement has one or more interfaces with one or more length-variable elements.

12. Brake pad set according to the preceding claim, **characterized in that** the respective brake pad (51, 52) and the suction pipe (513, 523) arranged thereon each form a preassembled, replaceable unit of the disc brake or **in that** the suction pipe arrangement and the two brake pads (51, 52) together form an overall preassembled, replaceable unit of the disc brake.

13. Brake pad set according to claim 11 or 12, **characterized in that** on the two brake pads (51, 52) a suction pipe (513, 523) with suction openings (5131, 5231) of the suction pipe arrangement is placed respectively in some sections or fully circumferentially around the lining material.

14. Brake pad set according to the preceding claim, **characterized in that** the respective suction pipes (5134, 523) one or more suction openings (5131, 5231) form a ring which is closed off by a Y-shaped pipe section.

15. Brake pad set according to any one of the preceding claims, **characterized in that** the respective suction pipe (513, 523) with suction openings (5131, 5231) is guided movably on the respective brake pad (51, 52).

16. Brake pad set according to the preceding claim, **characterized in that** the respective suction pipe (513, 523) with suction openings (5131, 5231) is guided movably on the respective brake pad (51, 52) by means of at least one spring, in particular at least one disc spring (5117, 5217).

17. Brake pad set according to any one of the preceding claims, **characterized in that** the respective suction pipe (513, 523), which is guided on the two brake pads (51, 52) in a circumferential manner around the lining material, is covered and/or sheathed on the respective brake pad fully or in some sections by means of a wiper device (518, 528).

## Revendications

1. Frein à disque, avec un étrier de frein (3) chevauchant un disque de frein (1), dans lequel des garnitures de frein (512, 522) respectivement dotées d'une garniture de friction (512, 522) et d'une plaque arrière (511, 521) sont disposées, garnitures qui peuvent respectivement être pressées avec leur garniture de friction (512, 522) des deux côtés contre des surfaces d'anneau de friction (2) du disque de frein (1), et avec un agencement de tuyau d'aspiration pour aspirer de l'abrasion produite lors de freinages, dans lequel l'agencement de tuyau d'aspiration comprend un ou plusieurs tuyaux d'aspiration (513, 523) disposés directement au niveau des deux garnitures de frein (51, 52), et en ce que l'agencement de tuyau d'aspiration présente au moins une interface pour le raccordement d'un appareil d'aspiration et de séparation externe au frein à disque, **caractérisé en ce que** l'interface présente au moins une ou plusieurs unités et/ou éléments de longueur variable, en particulier un soufflet de longueur variable et/ou un élément de douille de longueur variable (74), qui servent à absorber des mouvements, en particulier des mouvements de l'agencement de tuyau d'aspiration dus à l'usure de garniture et de disque.

2. Frein à disque selon la revendication 1, **caractérisé en ce que** la garniture de frein respective et le ou les tuyaux d'aspiration (513, 523) disposé(s) au niveau de celle-ci forment une unité prémontée interchangeable du frein à disque.

3. Frein à disque selon la revendication 1 ou 2, **caractérisé en ce que** l'agencement de tuyau d'aspiration avec les tubes d'aspiration (513, 523) et les deux garnitures de frein (51, 52) forment une unité prémontée interchangeable du frein à disque.

4. Frein à disque selon la revendication 1 ou 2, **caractérisé en ce que** les tuyaux d'aspiration (5134, 523) disposés au niveau des deux garnitures de frein (51, 52) présentent une ou plusieurs ouvertures d'aspiration (5131, 5231) et **en ce qu'**ils sont posés par sections ou entièrement autour des garnitures de friction (512, 522).

5. Frein à disque selon l'une quelconque des revendications précédentes, **caractérisé en ce que** les tuyaux d'aspiration respectifs (5134, 523) une ou plusieurs ouvertures d'aspiration (5131, 5231) forment un anneau qui est fermé par une pièce de tuyau en Y.

6. Frein à disque selon l'une quelconque des revendications précédentes, **caractérisé en ce que** le tuyau d'aspiration respectif (513, 523) avec des ouvertures d'aspiration (5131, 5231) est guidé de manière mobile au niveau de la garniture de frein respective (51, 52).

7. Frein à disque selon la revendication précédente, **caractérisé en ce que** le tuyau d'aspiration respectif (513, 523) avec des ouvertures d'aspiration (5131, 5231) est guidé de manière mobile au niveau de la garniture de frein respective (51, 52) au moyen d'au moins un ressort, en particulier au moins une rondelle-ressort (5117, 5217).

8. Frein à disque selon la revendication précédente, **caractérisé en ce que** le tuyau d'aspiration respectif (513, 523) se termine à la surface d'usure de la garniture de frein respective (51, 52) et repose contre le disque de frein (1) lorsque les garnitures de frein sont pressées contre lui.

9. Frein à disque selon l'une quelconque des revendications précédentes, **caractérisé en ce qu'**une complémentarité de formes entre un goujon de guidage respectif (5116, 5226) et la rondelle-ressort (5117, 5217) au niveau des deux garnitures de frein (51, 52) est conçue de sorte que les goujons de guidage (5116, 5226) peuvent être déplacés dans leur direction axiale par l'intermédiaire de la rondelle-ressort respective (5117, 5217), au moyen de la force de pression des garnitures de frein (51, 52), de manière unidirectionnelle dans la direction de l'usure et parallèle au plan par rapport à la surface d'usure des garnitures de frein (51, 52).

10. Frein à disque selon l'une des revendications précédentes, **caractérisé en ce que** le tuyau d'aspiration respectif (513, 523) guidé autour du matériau de garniture au niveau des deux garnitures de frein (51, 52) est recouvert et/ou enveloppé au niveau de la garniture de frein respective entièrement ou par sections au moyen d'un racloir (518, 528).

11. Jeu de garnitures de frein pour un frein à disque selon l'une quelconque des revendications précédentes, avec deux garnitures de frein (51, 52) qui présentent respectivement une garniture de friction (512, 522) et une plaque arrière (511, 521), **et avec un** ou plusieurs tuyaux d'aspiration (513, 523) d'un agencement de tuyau d'aspiration disposés directement au niveau des deux garnitures de frein (51, 52), dans lequel l'agencement de tuyau d'aspiration présente une ou plusieurs interfaces avec un ou plusieurs éléments de longueur variable.

12. Jeu de garnitures de frein selon la revendication précédente, **caractérisé en ce que** la garniture de frein respective (51, 52) et le ou les tuyaux d'aspiration (513, 523) disposé(s) au niveau de celle-ci forment respectivement une unité prémontée interchangeable du frein à disque ou **en ce que** l'agencement de tuyau d'aspiration et les deux garnitures de frein (51, 52) forment une unité globalement prémontée interchangeable du frein à disque.

13. Jeu de garnitures de frein selon la revendication 11 ou 12, **caractérisé en ce qu'**un tuyau d'aspiration (513, 523) avec des ouvertures d'aspiration (5131, 5231) de l'agencement de tuyau d'aspiration est disposé au niveau des deux garnitures de frein (51, 52) par sections ou entièrement autour du matériau de garniture.

14. Jeu de garnitures de frein selon la revendication précédente, **caractérisé en ce que** les tuyaux d'aspiration respectifs (5134, 523) une ou plusieurs ouvertures d'aspiration (5131, 5231) forment un anneau qui est fermé par une pièce de tuyau en Y.

15. Jeu de garnitures de frein selon l'une quelconque des revendications précédentes, **caractérisé en ce que** le tuyau d'aspiration respectif (513, 523) avec des ouvertures d'aspiration (5131, 5231) est guidé de manière mobile au niveau de la garniture de frein respective (51, 52).

16. Jeu de garnitures de frein selon la revendication précédente, **caractérisé en ce que** le tuyau d'aspiration respectif (513, 523) avec des ouvertures d'aspiration (5131, 5231) est guidé de manière mobile au niveau de la garniture de frein respective (51, 52) au moyen d'au moins un ressort, en particulier au moins une rondelle-ressort (5117, 5217).

17. Jeu de garnitures de frein selon l'une quelconque des revendications précédentes, **caractérisé en ce que** le tuyau d'aspiration respectif (513, 523) guidé autour du matériau de garniture au niveau des deux garnitures de frein (51, 52) est recouvert et/ou enveloppé au niveau de la garniture de frein respective entièrement ou par sections au moyen d'un appareil de raclage (518, 528).
